# EUROPÄISCHE PATENTSCHRIFT

(11) **EP 3 545 179 B1**
(45) Veröffentlichungstag und Bekanntmachung des Hinweises auf die Patenterteilung: **04.11.2020**
(21) Anmeldenummer: 17801443.7
(22) Anmeldetag: 20.11.2017
(51) Int. Cl.: F01N 3/20, F01N 3/28

(54) **VORRICHTUNG ZUR VERDAMPFUNG EINES FLUIDS**
DEVICE FOR EVAPORATING A FLUID
DISPOSITIF D'ÉVAPORATION D'UN FLUIDE

(30) Priorität: 28.11.2016 DE 102016223578
(43) Veröffentlichungstag der Anmeldung: 02.10.2019
(73) Patentinhaber: Vitesco Technologies GmbH, 30165 Hannover (DE)
(72) Erfinder: STOCK, Holger, 53721 Siegburg (DE); BRÜCK, Rolf, 51429 Bergisch Gladbach (DE); HIRTH, Peter, 51503 Rösrath (DE); BRUGGER, Marc, 53819 Neunkirchen-Seelscheid (DE)
(74) Vertreter: Barz, Torsten
(86) Internationale Anmeldenummer: PCT/EP2017/079713
(87) Internationale Veröffentlichungsnummer: WO 2018/095838

(56) Entgegenhaltungen:
- EP-A2- 1 967 712
- DE-A1- 10 254 764
- DE-A1-102014 117 687
- JP-U- H0 713 424

## Beschreibung

### Technisches Gebiet

Die Erfindung betrifft eine Vorrichtung zur Reinigung von Abgasen, mit einem von Abgas durchströmbaren Gehäuse, mit einer Einspritzvorrichtung zur Eindosierung eines Fluids, wobei das Fluid in den von Abgas durchströmbaren Bereich eindosierbar ist, und mit einer Verdampfungsvorrichtung, die in dem Gehäuse angeordnet ist. Außerdem betrifft die Erfindung ein Verfahren zum Betrieb der Vorrichtung. Solche Vorrichtungen sind z.B. aus der DE 10 2014 117687 A1 oder DE 102 54 764 A1 bekannt.

### Stand der Technik

In Abgassträngen von Verbrennungsmotoren werden unterschiedliche Komponenten eingesetzt um eine möglichst umfassende Nachbehandlung von Abgasen des Verbrennungsmotors zu erreichen. Unter anderem sind hierzu sogenannte SCR-Systeme bekannt, die zur Umwandlung der Stickoxide im Abgas vornehmlich bei Dieselmotoren eingesetzt werden. Hierzu wird Fluid in den Abgasstrang eingespritzt, um so eine Umwandlung der Stickoxide im Abgas zu Stickstoff und Wasser auszulösen. Sogenannte SCR-System (selective catalytic reduction) sind in vielfältigen Ausführungen im Stand der Technik bekannt. Bevorzugt wird als Fluid eine wässrige Harnstofflösung verwendet.

Um diese Umwandlung des Abgases sicherzustellen, wird gewöhnlich die wässrige Harnstofflösung in den Abgasstrang eingespritzt, wobei die Harnstofflösung insbesondere auf Strukturen im Abgasstrang aufgesprüht wird, die durch das Abgas eine Erwärmung erfahren. Wird dabei eine gewisse Mindesttemperatur erreicht, beginnt die Verdampfung der wässrigen Harnstofflösung, wodurch Ammoniak freigesetzt wird, welcher wiederum mit den Stickoxiden zu Stickstoff und Wasser reagiert.

In den bislang im Stand der Technik bekannten Abgasanlagen findet die Aufheizung der zur Verdampfung genutzten Strukturen durch Wärmekonvektion aus dem strömenden Abgas statt. Die Aufheizung ist somit direkt von der Abgastemperatur abhängig, wodurch insbesondere bei einem Kaltstart erst relativ spät mit einer Eindüsung der wässrigen Harnstofflösung begonnen werden kann. Auch in niedrigen Lastbereichen, die eventuell zu einer nicht ausreichend hohen Abgastemperatur führen, kann die Eindüsung verspätet erfolgen oder gänzlich ausbleiben. Außerdem kann es bei absinkenden Abgastemperaturen zu chemischen Nebenreaktionen kommen, wodurch Ablagerungen an den Verdampfungselementen oder im Abgasstrang allgemein entstehen können. Durch die Ablagerungen kann die Effektivität des Abgasnachbehandlungssystems verschlechtert werden.

### Darstellung der Erfindung, Aufgabe, Lösung, Vorteile

Daher ist es die Aufgabe der vorliegenden Erfindung ein Abgasnachbehandlungssystem zu schaffen, welches eine optimierte Aufheizung der zur Verdampfung genutzten Strukturen im Abgasstrang erlaubt. Wobei insbesondere ein schnelleres Erreichen der zur Verdampfung des Fluids notwendigen Temperatur sichergestellt werden soll. Außerdem ist es die Aufgabe der Erfindung ein Verfahren zum Betrieb der Vorrichtung zu schaffen.

Die Aufgabe hinsichtlich der Vorrichtung wird durch eine Vorrichtung mit den Merkmalen von Anspruch 1 gelöst.

Ein Ausführungsbeispiel der Erfindung betrifft eine Vorrichtung zur Reinigung von Abgasen, mit einem von Abgas durchströmbaren Gehäuse, mit einer Einspritzvorrichtung zur Eindosierung von einem Fluid, wobei das Fluid in den von Abgas durchströmbaren Bereich eindosierbar ist, und mit einer Verdampfungsvorrichtung, die in dem Gehäuse angeordnet ist, wobei die Verdampfungsvorrichtung eine Mehrzahl von sich entlang der Hauptdurchströmungsrichtung des Gehäuses erstreckenden Flächenelementen aufweist und das Fluid entlang einer senkrecht zur Hauptdurchströmungsrichtung verlaufenden Richtung eindosierbar ist, wobei die Verdampfungsvorrichtung durch eine Heizvorrichtung elektrisch aufheizbar ist.

Als Fluid wird zum Zwecke der Umwandlung der im Abgas enthaltenen Stickoxide bevorzugt eine wässrige Harnstofflösung verwendet. Durch das Verdampfen der wässrigen Harnstofflösung wird im Abgasstrang Ammoniak gebildet, der mit den Stickoxiden zu Stickstoff und Wasser reagiert.

Die Flächenelemente verlaufen vorteilhaft entlang der Durchströmungsrichtung des Gehäuses. Dies ist notwendig, um den durch die Flächenelemente entstehenden Druckverlust im Abgasstrang möglichst gering zu halten. Gleichzeitig erschwert dies die Aufheizung der Flächenelemente, welche in bekannten Ausführungen lediglich durch Wärmeübergang aus dem strömenden Abgas erfolgt.

Um eine möglichst schnelle Aufheizung der Flächenelemente zu gewährleisten muss daher eine zusätzliche Heizquelle vorgesehen werden, die vorteilhafterweise unabhängig vom tatsächlichen Abgasstrom zu einer Aufheizung der Flächenelemente führt. Durch eine schnellere Aufheizung kann die Verdampfung des Fluids, die zum Betrieb der Abgasnachbehandlungsvorrichtung notwendig ist, früher beginnen, was insbesondere bei einem Kaltstart des Verbrennungsmotors eine schnellere vollständige Abgasnachbehandlung ermöglicht.

Das Aufdosieren oder Aufsprühen des Fluids in einem rechten Winkel auf die Flächenelemente ist vorteilhaft, da sich das Fluid dadurch besonders gut verteilt und mit einer möglichst großen Reaktionsfläche in Kontakt kommt, wodurch die Verdampfung verbessert wird. In einer vorteilhaften Ausgestaltung sind die Flächenelemente derart angeordnet, dass diese aus Sicht der Eindosierstelle nicht in einer direkten Flucht miteinander liegen, wodurch weiter entfernt liegende Flächenelemente beispielsweise in einem Schatten eines näher an der Eindosierstelle angeordneten Flächenelementes liegen könnten. Besonders vorteilhaft ist es, wenn die Heizvorrichtung durch ein als Heizleiter ausgebildetes Widerstandsheizelement gebildet ist. Die Aufheizung per Widerstandsheizelement ist besonders vorteilhaft, da sie einfach zu realisieren ist und die Formgebung des Heizelementes nur wenigen Kriterien unterliegt. Widerstandsheizungen sind in vielfältigen Anwendungsbereichen bekannt und können somit kostengünstig und zuverlässig realisiert werden. Das Widerstandsheizelement kann beispielsweise durch einen stromdurchflossenen Leiter in Form eines Wabenkörpers gebildet sein. Die Flächenelemente können elektrisch isoliert zu dem Heizleiter angeordnet sein, so dass die Flächenelemente selbst nicht durch den Effekt der Widerstandsheizung erwärmt werden. Die Aufheizung der Flächenelemente findet in diesem Fall durch Konvektion vom Heizleiter selbst statt und dadurch, dass das strömende Abgas durch den Heizleiter erwärmt wird bevor es an den Flächenelemente entlang strömt. Alternativ können die Flächenelemente auch direkt elektrisch leitend mit dem Heizelement verbunden sein, wodurch diese ebenfalls durch den Effekt der Widerstandsheizung erwärmt werden.

Auch ist es vorteilhaft, wenn die Heizvorrichtung durch ein oder mehrere PTC-Heizelemente gebildet ist. PTC-Heizelemente (Positive Temperature Coefficient) sind im Stand der Technik weithin bekannt. PTC-Heizelemente können gezielt zur Aufheizung des Abgases genutzt werden, indem eine Spannung an sie angelegt wird. Abhängig von dem gewählten Material und der angelegten Spannung kann eine vordefinierte Aufheizung der PTC-Elemente erzielt werden.

Auch ist es zu bevorzugen, wenn die Flächenelemente durch PTC-Heizelemente gebildet sind, die von einem durchströmbaren Trägerelement entlang der Hauptdurchströmungsrichtung des Gehäuses abragen. Das Ausbilden der Flächenelemente durch die PTC-Heizelemente selbst ist vorteilhaft, da dadurch eine besonders kompakte Heizvorrichtung geschaffen werden kann. Weiterhin wird insbesondere der Druckverlust infolge der Heizvorrichtung minimiert, während trotzdem eine relativ große beheizte Oberfläche mit dem strömenden Abgas in Kontakt steht. Da das Fluid direkt im rechten Winkel auf die Flächenelemente aufdosiert wird, kann durch eine direkte Aufheizung der Flächenelemente auch eine Verdampfung des Fluids unabhängig von der Temperatur des Abgasstroms erreicht werden. Dies ist besonders vorteilhaft, da die Aufheizdauer bis zum Erreichen der Verdampfungstemperatur des Fluids somit im Wesentlichen durch die Charakteristika der PTC-Heizelemente bestimmt ist und unabhängig von der Erwärmung des Abgases ist.

Darüber hinaus ist es vorteilhaft, wenn die PTC-Heizelemente mit einer abgasresistenten Folie umwickelt sind. Dies ist vorteilhaft um einerseits schädigende Einflüsse des Abgases von den PTC-Heizelementen abzuhalten und andererseits auch das ungewollte chemische Reagieren der PTC-Heizelemente mit dem Fluid, den Umsetzungsprodukten oder dem Abgas zu vermeiden.

Es ist erfindungsgemäß, dass die Heizvorrichtung durch eine entlang der Hauptdurchströmungsrichtung der Verdampfungsvorrichtung vorgelagerte Heizscheibe gebildet ist. Eine Heizscheibe ist vorteilhaft, da einerseits das Abgas relativ ungehindert durch sie hindurch strömen kann und andererseits eine bezogen auf das Volumen große Oberfläche zur Beheizung des strömenden Abgasstroms erzeugt wird. Erfindungsgemäß ist eine solche Heizscheibe als Wabenkörper ausgestaltet, die eine Mehrzahl von entlang der Hauptdurchströmungsrichtung verlaufenden Strömungskanälen aufweist.

Auch ist es zweckmäßig, wenn die Heizvorrichtung eine Einzahl oder Mehrzahl von Heizleitern aufweist, die auf ein Trägerelement aufgedruckt sind. Aufgedruckte Heizleiter bieten den Vorteil, dass der Verlauf der Heizleiter frei gestaltbar ist.

Darüber hinaus ist es erfindungsgemäß, dass die Heizscheibe durch einen metallischen Wabenkörper gebildet ist, der eine Vielzahl von Strömungskanälen aufweist, die entlang der Hauptdurchströmungsrichtung des Gehäuses verlaufen, wobei die Flächenelemente in einzelne Strömungskanäle eingesteckt sind und entlang der Hauptdurchströmungsrichtung des Gehäuses von der Heizscheibe abragen.

Ein solcher Aufbau ist vorteilhaft, da Heizscheiben dieser Art einfach zu produzieren sind und in vielfältigen Bauformen hergestellt werden können. Durch das Einstecken der Flächenelemente in die Strömungskanäle kann erreicht werden, dass die Flächenelemente direkt durch den physischen Kontakt mit aufgeheizt werden. Sofern die Heizscheibe als Widerstandsheizung ausgelegt ist und die Flächenelemente nicht elektrisch isoliert von der Heizscheibe ausgeführt sind, werden diese ebenfalls durch den Effekt der Widerstandsheizung mit erwärmt. Sofern eine elektrische Isolation vorgesehen ist, wird die Wärme direkt von der Heizscheibe auf die Flächenelemente durch den Materialkontakt übertragen.

Weiterhin ist es erfindungsgemäß, dass die Flächenelemente der Heizvorrichtung derart im Gehäuse positioniert sind, dass das von der Einspritzvorrichtung eindosierbare Fluid im Wesentlichen senkrecht zur Hauptdurchströmungsrichtung auf die Flächenelemente aufsprühbar ist. Dies ist vorteilhaft, um eine möglichst große wirksame Fläche an den Flächenelementen zu erzeugen, damit das Fluid möglichst schnell möglichst vollständig verdampft werden kann. Durch das senkrechte Aufsprühen wird erreicht, dass sich das Fluid möglichst weit in axialer Richtung durch die Abgasströmung ausbreitet und so möglichst viel der von den Flächenelementen ausgestrahlte Wärme aufnimmt, um so verdampft zu werden. Das Einsprühen in einem Winkel deutlich unter 90 Grad führt dazu, dass mehr Fluid vom Abgasstrom mitgerissen wird, bevor sie durch die Flächenelemente verdampft werden kann, wodurch die Abgasnachbehandlung verschlechtert wird.

Die Aufgabe hinsichtlich des Verfahrens wird durch ein Verfahren mit den Merkmalen von Anspruch 7 gelöst. Ein Ausführungsbeispiel der Erfindung betrifft ein Verfahren, wobei die Temperatur des Abgases und/oder die Temperatur der Verdampfungsvorrichtung erfasst wird und abhängig von einer vorgebbaren Mindesttemperatur die Eindosierung des Fluids erst erfolgt, wenn diese vorgebbare Mindesttemperatur erreicht ist. Dies ist vorteilhaft, um zu vermeiden, dass das Fluid bei zu niedrigen Temperaturen, insbesondere unterhalb der Verdampfungstemperatur, eindosiert wird und somit das Fluid in flüssiger Form im Abgasstrang verbleibt.

Nicht verdampftes Fluid kann zu Beschädigungen des Abgasstrangs führen und im schlimmsten Fall auch mit dem Abgas aus dem Auspuff entweichen, wodurch die Lösung in die Umwelt freigesetzt wird. Weiterhin können flüssige Bestandteile im Abgas in bestimmten Betriebssituationen auch ihren Weg zur Ansaugung des Verbrennungsmotors finden, wodurch es zu Schäden am Verbrennungsmotor selbst kommen kann.

Darüber hinaus ist es zu bevorzugen, wenn bei Unterschreiten der Mindesttemperatur die Heizvorrichtung aktiviert wird, um eine Aufheizung der Verdampfungsvorrichtung auf oder über die Mindesttemperatur zu erreichen. Dies ist vorteilhaft, um sicherzustellen, dass immer eine ausreichende Temperatur zur Verdampfung des Fluids vorliegt. Andernfalls kann eine ausreichende Abgasnachbehandlung nicht sichergestellt werden.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine Schnittansicht durch einen Abgasstrang, wobei in Strömungsrichtung des Abgases nach einem ersten Katalysator eine Heizvorrichtung und eine Verdampfungsvorrichtung angeordnet sind, auf welche ein FLuid aufgesprüht werden kann,
- Fig. 2: eine perspektivische Ansicht einer Heizscheibe mit einer Vielzahl Flächenelementen, die Teil des Verdampfungselementes sind und von der Heizscheibe abragen,
- Fig. 3: eine Detailansicht eines als Pin ausgeführten Flächenelementes, welches in einen Strömungskanal eines Wabenkörpers eingesteckt ist, der die Heizscheibe bildet, und
- Fig. 4: eine Schnittansicht eines als PTC-Heizelement ausgebildeten Heizelementes, wobei das Heizelement von einer Schutzfolie umwickelt ist.

### Bevorzugte Ausführung der Erfindung

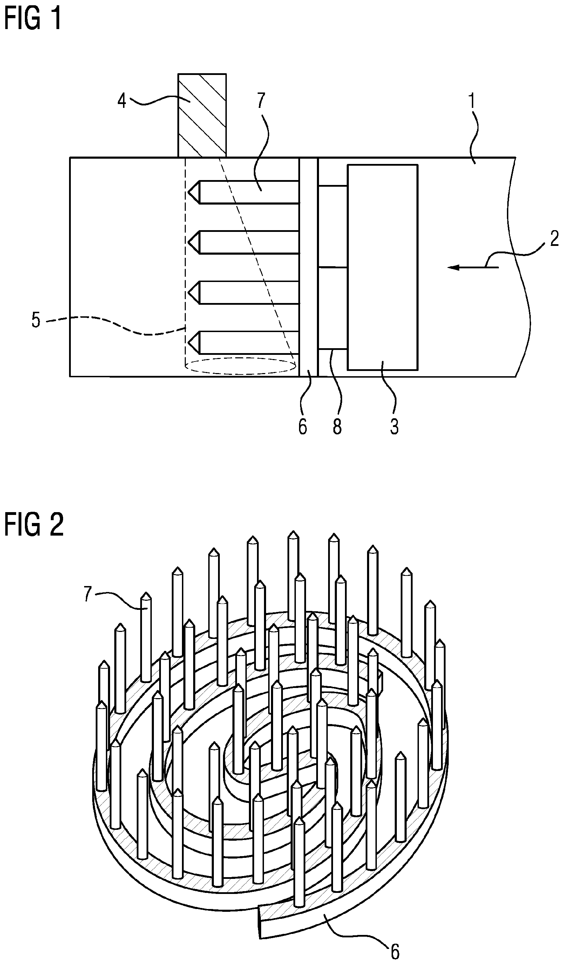

Die Figur 1 zeigt einen Schnitt durch ein Gehäuse 1, welches einen Abgasstrang ausbildet. Durch das Gehäuse 1 kann entlang der Hauptdurchströmungsrichtung 2 Abgas strömen. Mit dem Bezugszeichen 3 ist stellvertretend für eine Vielzahl von möglichen Katalysatoren ein einzelner Katalysator 3 dargestellt, der von dem Abgas durchströmbar ist.

Entlang der Hauptdurchströmungsrichtung 2 dem Katalysator 3 nachgelagert ist eine Heizscheibe 6 angeordnet, von welcher parallel zur Hauptdurchströmungsrichtung 2 eine Mehrzahl von Flächenelementen 7 abragt. Diese Flächenelemente 7 können beispielsweise durch Pins gebildet sein, welche in Öffnungen, die beispielsweise durch die Strömungskanäle der Heizscheibe gebildet sind, eingesteckt sind. Die Flächenelemente 7 vergrößern somit die beheizte Oberfläche, wodurch eine bessere und insbesondere schnellere Verdampfung des eindosierten Fluids erreicht werden kann.

Die Harnstofflösung kann über den seitlich an einer Außenwand des Gehäuses 1 angeordneten Injektor 4 in das Gehäuse 1 eindosiert werden. Die Harnstofflösung breitet sich von da kegelförmig 5 in das Gehäuse 1 aus und trifft vorzugsweise in einem rechten Winkel zur Hauptdurchströmungsrichtung 2 auf die sich entlang der Hauptdurchströmungsrichtung 2 erstreckenden Flächenelemente 7.

Die Flächenelemente 7 dienen der Vergrößerung der Heizfläche der Heizscheibe 6. Durch den direkten Kontakt zur Heizscheibe 6 werden die Flächenelemente 7 mit erwärmt.

Im Ausführungsbeispiel der Figur 1 ist die Heizscheibe 6 über Distanzelemente 8 zum Katalysator 3 beabstandet. Dies stellt lediglich eine vorteilhafte Ausführung dar. In alternativen Ausgestaltungen kann die Heizscheibe oder allgemein die Heizvorrichtung auch anderweitig im Gehäuse befestigt sein.

Die Figur 2 zeigt eine perspektivische Ansicht einer Heizscheibe 6 mit einer Mehrzahl von Flächenelementen 7. Die Flächenelemente 7 sind in diesem Ausführungsbeispiel als zylinderförmige Pins ausgebildet und entlang der Heizscheibe 6 verteilt. Die Heizscheibe 6 ist durch ein mäanderartig aufgewickeltes Metallelement gebildet, das elektrisch beheizt werden kann. Die Flächenelemente 7 können auch andersartige Ausformungen aufweisen.

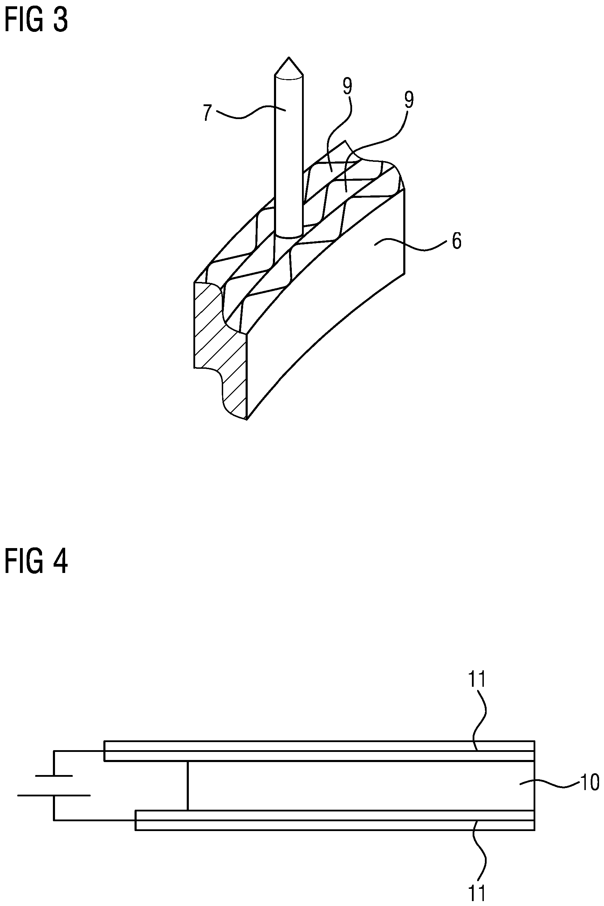

Die Figur 3 zeigt eine Detailansicht eines Pins 7 der in einen der Strömungskanäle 9 in der Heizscheibe 6 eingesteckt ist. Die Heizscheibe 6 ist dabei wie ein Wabenkörper aus einer Mehrzahl von aufeinandergestapelten Glattlagen und Welllagen ausgebildet, wobei sich die Strömungskanäle 9 zwischen den Glattlagen und Welllagen ausbilden.

Bevorzugt sind die Pins 7 derart ausgestaltet, dass diese passgenau in die Strömungskanäle 9 eingesteckt werden können. Durch den direkten Kontakt zwischen den Pins 7 und der Heizscheibe 6 werden die Pins 7 direkt mit der Heizscheibe 6 mit erwärmt.

Die Figur 4 zeigt ein Flächenelement 7, welches bevorzugt durch ein PTC-Heizelement gebildet ist. Im Kern des Heizelementes ist ein PTC-Element 10 oder in einer alternativen Ausführung ein einfacher Heizleiter angeordnet. Über das Anlegen einer Spannung kann somit eine definierte Aufheizung erzielt werden.

Im Ausführungsbeispiel der Figur 4 ist das Heizelement 10 mit einer Folie 11 umwickelt, die beispielsweise das Heizelement 10 gegenüber den korrosiven Eigenschaften des vorbeiströmenden Abgases schützt oder vor den chemischen Eigenschaften der Harnstofflösung.

Solche Heizelemente 10 können in eine Heizscheibe wie sie in den vorausgegangenen Figuren gezeigt wurde anstelle der Pins eingesteckt werden. Es ist aber auch möglich ein an sich nicht beheizbares Trägerelement zu verwenden und die Beheizung gänzlich durch die Heizelemente 10 zu erreichen.

Die unterschiedlichen Merkmale der einzelnen Ausführungsbeispiele können auch untereinander kombiniert werden. Die Ausführungsbeispiele der Figuren 1 bis 4 weisen insbesondere keinen beschränkenden Charakter auf und dienen der Verdeutlichung des Erfindungsgedankens.

## Patentansprüche

1. Vorrichtung zur Reinigung von Abgasen, mit einem von Abgas durchströmbaren Gehäuse (1), mit einer Einspritzvorrichtung (4) zur Eindosierung von einem Fluid, wobei das Fluid in den von Abgas durchströmbaren Bereich eindosierbar ist, und mit einer Verdampfungsvorrichtung, die in dem Gehäuse angeordnet ist, wobei die Verdampfungsvorrichtung eine Mehrzahl von sich entlang der Hauptdurchströmungsrichtung (2) des Gehäuses (1) erstreckenden Flächenelementen (7) aufweist und das Fluid entlang einer senkrecht zur Hauptdurchströmungsrichtung (2) verlaufenden Richtung eindosierbar ist, wobei die Verdampfungsvorrichtung durch eine Heizvorrichtung (6, 10) elektrisch aufheizbar ist, wobei die Heizvorrichtung (6) durch eine entlang der Hauptdurchströmungsrichtung (2) der Verdampfungsvorrichtung vorgelagerte Heizscheibe (6) gebildet ist, wobei die Heizscheibe (6) durch einen metallischen Wabenkörper gebildet ist, der eine Vielzahl von Strömungskanälen (9) aufweist, die entlang der Hauptdurchströmungsrichtung (2) des Gehäuses (1) verlaufen, wobei die Flächenelemente (7) in einzelne Strömungskanäle (9) eingesteckt sind und entlang der Hauptdurchströmungsrichtung (2) des Gehäuses (1) von der Heizscheibe (6) abragen, **dadurch gekennzeichnet, dass** die Flächenelemente (7) der Heizvorrichtung derart im Gehäuse (1) positioniert sind, dass das von der Einspritzvorrichtung (4) eindosierbare Fluid im Wesentlichen senkrecht zur Hauptdurchströmungsrichtung (2) auf die Flächenelemente (7) aufsprühbar ist.

2. Vorrichtung nach Anspruch 1, **dadurch gekennzeichnet, dass** die Heizvorrichtung (6) durch ein als Heizleiter ausgebildetes Widerstandsheizelement gebildet ist.

3. Vorrichtung nach einem der vorhergehenden Ansprüche, **dadurch gekennzeichnet, dass** die Heizvorrichtung durch ein oder mehrere PTC-Heizelemente (10) gebildet ist.

4. Vorrichtung nach Anspruch 3, **dadurch gekennzeichnet, dass** die die Flächenelemente durch PTC-Heizelemente (10) gebildet sind, die von einem durchströmbaren Trägerelement entlang der Hauptdurchströmungsrichtung (2) des Gehäuses (1) abragen.

5. Vorrichtung nach Anspruch 4, **dadurch gekennzeichnet, dass** die PTC-Heizelemente (10) mit einer abgasresistenten Folie (11) umwickelt sind.

6. Vorrichtung nach einem der vorhergehenden Ansprüche, **dadurch gekennzeichnet, dass** die Heizvorrichtung eine Einzahl oder Mehrzahl von Heizleitern aufweist, die auf ein Trägerelement aufgedruckt sind.

7. Verfahren zum Betrieb einer Vorrichtung nach einem der vorhergehenden Ansprüche, **dadurch gekennzeichnet, dass** die Temperatur des Abgases und/oder die Temperatur der Verdampfungsvorrichtung erfasst wird und abhängig von einer vorgebbaren Mindesttemperatur die Eindosierung des Fluids erst erfolgt, wenn diese vorgebbare Mindesttemperatur erreicht ist.

8. Verfahren zum Betrieb einer Vorrichtung nach Anspruch 7, **dadurch gekennzeichnet, dass** bei Unterschreiten der Mindesttemperatur die Heizvorrichtung aktiviert wird, um eine Aufheizung der Verdampfungsvorrichtung auf oder über die Mindesttemperatur zu erreichen.

## Claims

1. Device for cleaning exhaust gases, having a housing (1) through which exhaust gas is able to flow, having an injection device (4) for dosing in a fluid, wherein the fluid is able to be dosed into the region through which exhaust gas is able to flow, and having an evaporation device which is arranged in the housing, wherein the evaporation device has a plurality of surface elements (7) which extend along the main throughflow direction (2) of the housing (1), and the fluid is able to be dosed in along a direction which extends perpendicularly with respect to the main throughflow direction (2), wherein the evaporation device is able to be electrically heated by a heating device (6, 10), wherein the heating device (6) is formed by a heating disc (6) which is arranged upstream of the evaporation device along the main throughflow direction (2), wherein the heating disk (6) is formed by a metallic honeycomb body which has a multiplicity of flow channels (9) which extend along the main throughflow direction (2) of the housing (1), wherein the surface elements (7) are inserted in individual flow channels (9) and project from the heating disk (6) along the main throughflow direction (2) of the housing (1), **characterized in that** the surface elements (7) of the heating device are positioned in the housing (1) such that the fluid able to be dosed in by the injection device (4) is able to be sprayed onto the surface elements (7) substantially perpendicularly with respect to the main throughflow direction (2).

2. Device according to Claim 1, **characterized in that** the heating device (6) is formed by a resistance heating element in the form of a heating conductor.

3. Device according to either of the preceding claims, **characterized in that** the heating device is formed by one or more PTC heating elements (10).

4. Device according to Claim 3, **characterized in that** the surface elements are formed by PTC heating elements (10) which project from a support element, which is able to be flowed through, along the main throughflow direction (2) of the housing (1).

5. Device according to Claim 4, **characterized in that** an exhaust gas-resistant film (11) is wound around the PTC heating elements (10).

6. Device according to one of the preceding claims, **characterized in that** the heating device has a single or multiple heating conductor(s), which is/are press-fitted on a support element.

7. Method for operating a device according to one of the preceding claims, **characterized in that** the temperature of the exhaust gas and/or the temperature of the evaporation device are/is detected and the dosing-in of the fluid is realized, in a manner dependent on a predefinable minimum temperature, only when said predefinable minimum temperature has been reached.

8. Method for operating a device according to Claim 7, **characterized in that**, with a fall below the minimum temperature, the heating device is activated in order for the evaporation device to be heated to, or to above, the minimum temperature.

## Revendications

1. Dispositif de purification de gaz d'échappement, comprenant un boîtier (1) à travers lequel peuvent s'écouler des gaz d'échappement, comprenant un dispositif d'injection (4) destiné à l'apport dosé d'un fluide, le fluide pouvant être apporté de manière dosée dans la zone à travers laquelle peuvent s'écouler des gaz d'échappement, et comprenant un dispositif de vaporisation qui est disposé dans le boîtier, le dispositif de vaporisation possédant une pluralité d'éléments plats (7) qui s'étendent le long de la direction d'écoulement traversant principale (2) du boîtier (1) et le fluide pouvant être apporté de manière dosée le long d'une direction qui suit un tracé perpendiculaire à la direction d'écoulement traversant principale (2), le dispositif de vaporisation pouvant être chauffé électriquement par un dispositif de chauffage (6, 10), le dispositif de chauffage (6) étant formé par un disque chauffant (6) monté en amont du dispositif de vaporisation dans la direction d'écoulement traversant principale (2), le disque chauffant (6) étant formé par un corps alvéolaire métallique, lequel possède une pluralité de canaux d'écoulement (9) qui suivent un tracé le long de la direction d'écoulement traversant principale (2) du boîtier (1), les éléments plats (7) étant insérés dans des canaux d'écoulement (9) individuels et faisant saillie du disque chauffant (6) le long de la direction d'écoulement traversant principale (2) du boîtier (1), **caractérisé en ce que** les éléments plats (7) du dispositif de chauffage sont positionnés dans le boîtier (1) de telle sorte que le fluide pouvant être apporté de manière dosée par le dispositif d'injection (4) peut être pulvérisé sur les éléments plats (7) sensiblement perpendiculairement à la direction d'écoulement traversant principale (2).

2. Dispositif selon la revendication 1, **caractérisé en ce que** le dispositif de chauffage (6) est formé par un élément chauffant résistif réalisé sous la forme d'un conducteur chauffant.

3. Dispositif selon l'une des revendications précédentes, **caractérisé en ce que** le dispositif de chauffage est formé par un ou plusieurs éléments chauffants à CTP (10).

4. Dispositif selon la revendication 3, **caractérisé en ce que** les éléments plats sont formés par des éléments chauffants à CTP (10) qui font saillie depuis un élément porteur pouvant être traversé par un écoulement le long de la direction d'écoulement traversant principale (2) du boîtier (1).

5. Dispositif selon la revendication 4, **caractérisé en ce que** les éléments chauffants à CTP (10) sont enveloppés par un film (11) résistant aux gaz d'échappement.

6. Dispositif selon l'une des revendications précédentes, **caractérisé en ce que** le dispositif de chauffage possède un nombre unique ou une pluralité de conducteurs chauffants qui sont imprimés sur un élément porteur.

7. Procédé pour faire fonctionner un dispositif selon l'une des revendications précédentes, **caractérisé en ce que** la température des gaz d'échappement et/ou la température du dispositif de vaporisation sont détectées et l'apport dosé du fluide est effectué en fonction d'une température minimale pouvant être prédéfinie seulement lorsque cette température minimale pouvant être prédéfinie est atteinte.

8. Procédé pour faire fonctionner un dispositif selon la revendication 7, **caractérisé en ce que** le dispositif de chauffage est activé lorsque la température minimale est franchie vers le bas, afin d'obtenir un échauffement du dispositif de vaporisation à la température minimale ou au-dessus de celle-ci.
